Europäisches Patentamt

European Patent Office

Office européen des brevets

(11) Publication number: **0 374 489 B1**

# EUROPEAN PATENT SPECIFICATION

(45) Date of publication of patent specification: **25.01.95**    (51) Int. Cl.⁶: **B26D 7/06**, B65G 47/64, B65G 47/84, B31C 11/00

(21) Application number: **89121327.4**

(22) Date of filing: **17.11.89**

(54) **Process and apparatus for manufacturing cylindrical supports on trimming machines.**

(30) Priority: **28.11.88 IT 367688**
**16.06.89 IT 4574289**
**23.06.89 IT 4574689**
**28.06.89 IT 4574989**

(43) Date of publication of application:
**27.06.90 Bulletin 90/26**

(45) Publication of the grant of the patent:
**25.01.95 Bulletin 95/04**

(84) Designated Contracting States:
**AT BE CH DE ES FR GB GR LI LU NL SE**

(56) References cited:
**DE-A- 2 354 303**
**DE-A- 2 638 280**
**GB-A- 2 110 729**
**US-A- 4 057 138**
**US-A- 4 193 489**

(73) Proprietor: **Bastianello, Umberto**
**Via Timavo 1**
**I-36100 Vicenza (IT)**

(72) Inventor: **Mengotti, Giovanni**
**Vicolo Parolini 18**
**I-36061 Bassano del Grappa**
**Vicenza (IT)**
Inventor: **Pacchioni, Italo**
**Via Gaia 58**
**I-36100 Vicenza (IT)**

(74) Representative: **Giugni, Valter et al**
**PROPRIA**
**Protezione Proprietà Industriale S.p.A.**
**Via Mazzini 13**
**I-33170 Pordenone (IT)**

Rank Xerox (UK) Business Services
(3.10/3.09/3.3.3)

## Description

This invention covers the manufacturing apparatus for cylindrical supports as may be used in various applications, but particularly in the textile industry as supports for reels or cones of yarn ready for weaving.

The production of such cylindrical supports, that will be called cops hereinafter, is currently made essentially by a manufacturing process which basically includes the following four manufacturing steps:

    1) Production of the basic, unfinished cardboard tube

    2) Drying

    3) Production of cut-to-length cops out of the tube

    4) Finishing and trimming.

Special spirally winding machines produce the tubes in continuous pieces having different sizes and wall thicknesses in accordance with the actual needs.

Said semi-finished tubes are then cut to length into several equally sized cops having a length of approx. 120 to 130 cm, which are then loaded by hand into proper containers that are finally brought to the drying equipment for the glue to dry up. Such a drying equipment may be of the chamber or the tunnel type, while the holding time of the cops in the drying equipment itself varies according to their wall thickness and the type of the materials used for their production.

After this drying step, the cops are carried to a trimming cutter where the dried cops are cut to their ultimate length according to the actual size requirements which usually call for a length ranging front approx. 100 to approx. 300 mm.

After this cutting-to-length operation, an automatic device provides for transferring the cut-to-length cops either to the "finishing" or "trimming" machine, which performs the finishing operations on the surface and at both ends of the cops, or to the boxing machine.

This final step is an essential one in view of determining the ultimate characteristics of the product itself: as a matter of fact, it is necessary for the latter to feature the required centering marks, the yarn fastening slots, etc., as well as rounded-off cyclinder edges.

All these operations are usually carried out by a finishing and trimming machine, that will be simply called trimming machine hereinafter, although it is clear that such a machine can also be a boxing or cartoning machine.

The feed system used to load the trimming machine involves the transfer of a cop at a time by means of a small pneumatic system.

The use of such a pneumatic system, although ensuring a high reliability to the whole system, does not enable high feeding rates to be obtained, since such a piston shall in each case perform its idle backward stroke, so that the highest attainable feeding rate does not exceed approx. 100 to 120 pieces per minute.

The currently used processes for manufacturing the afore cited cops are therefore rigid and as a direct consequence of this absence of flexibility, due to the fact that all the various afore described machines are usually arranged in series, ie. in sequence along a single production line, the well-known affect comes true according to which the highest possible rate of the whole line cannot exceed the rate of the slowest machine in the line itself. And in most cases the trimming or finishing machine is the slowest one in the whole process.

Under practical production conditions, however, the need arises quite frequently for manufacturing cops to widely varying sizes, ie. having differing sizes as far as their length, diameter and wall thickness are concerned, so that it only happens quite seldom that the production line itself can be fully saturated in all its parts and functions (ie. winding machine, drying oven, tube cutter and trimming machine) and this usually leads to a poor utilization of the production facility due to the practical impossibility of exploiting its full output capabilities, as well as to an increasing weight of labour costs on several types of cops due to the low hourly productivity of the line.

Another factor leading to considerable cost increases is the time that is usually wasted when it is necessary to set up the production line for accomodating new models or versions of the product.

In other words, the downtime suffered when the need arises to change the model being produced may be as high as 4 to 6 hours as far as the trimming machine is concerned, while the remaining part of the continuous manufacturing line can be set up and adjusted to the new requirements in a much shorter time (approx. 30 minutes for setting the winding and wrapping machine to the new size and thickness of the tube and the cutting machine to the new cutting length of the cops). It therefore quiet clearly emerges that the line downtime in these cases is actually caused by the need of setting up and adjusting the trimming machine to the characteristics of the new model, owing to the fact that said trimming machine is the mechanically most complex equipment in the whole line due to the various operations that it is required to perform.

In conclusion, the typical drawbacks of the current manufacturing systems can be summarized as follows:

    1) Rigid, single-model line with the various machines arranged in series according to a sequential layout and, as a consequence, practical impossibility of simultaneously manufacturing products with differing final characteristics and coming from a single feeding line.

2) Output rate which is limited by the working rate of the final trimming machine, which is usually fed by pneumatic means.

3) Line set-up times for model changes, which also in this case are affected by the penalty put upon them by the actual set-up time necessary for the most complex machine (and, again, this is the final trimming machine) and, as a consequence, very long downtimes for the whole line which considerably affect both direct and indirect manufacturing costs.

From GB-A-2110729 a positioning and transferring spinning cops machine is known for their positioning and individual transfer to a following device with an end plate, on which the spinning cops are moved in a position aligned in the direction of their longitudinal axis.

Said machine is working with cops, that move on different and multiple parallel tracks, instead of on one conveyor alone, as is the case with the present production process.

Furthermore said machine does not allow the passing of cops beyond the stop beam, so preventing the possibility for any cop to proceed further and the consequent possibility of cops selection, for the supplying a plurality of finishing machines placed along the same conveyor.

From DE-A-2354303 a transferring machine is known potentially working at a high rate; there is no selective stopping and selection devices, as the rotating device does transfer all of the items passing on the conveyor, without any possible selection.

It is therefore the object of the present invention to overcome all the afore described drawbacks by providing a manufacturing line which is both more flexible and faster as far as both the output rates and the set-up times for model changes are concerned, and all this without making use of special, very expensive equipment, but rather having resort to machines which are commonly available on the market.

This and other objects are attained in an apparatus according to the invention as defined by claim 1, the dependent claims defining further embodiments of the invention.

The apparatus according to the invention will be further described by way of example with reference to the accompanying drawings in which:

- Figure 1 is a schematic view of an embodiment of the apparatus
- Figure 2 is a schematic view of a typical apparatus for manufacturing cops, in which a device according to the invention is installed;
- Figure 3 is a view of the device according to the invention, showing some details;
- Figure 4 is a view of an exemplifying embodiment of the device as duly fitted with its position sensors for detecting the presence of the cops along the conveying means;
- Figure 5 is a view of a preferred embodiment;
- Figures 6 and 7 are schematic views of the apparatus of Fig. 1, showing further details.

The operation of this manufacturing line is well-known from the state of the art as far as the winding/wrapping machine, the drying oven and the cutting-to-length machine are concerned. Moreover, it has already been illustrated at the beginning of this description.

This invention covers the handling and the processing of the cops from the moment in which they are already cut to their final length by the cutting machine

Starting front this moment, the cops are automatically transferred to distributing means comprising a conveyor belt 12, which moves the various cops with an essentially linear displacement to a series of successive intermediate stations 13, 14, 15.

From these intermediate stations, other handling means comprised in the distributing means will then transfer the cops that are passing through the same intermediate stations in a continuous sequence to a single corresponding trimming machine 4,5,6 (for example trimming machine 4) for the finishing step, and then on to the corresponding loading machines.

Since this invention has been based on the assumption that the output rate up to and including the cutting-to length machine is far higher than the actual rate which the trimming machine 4 is able to cope with, it will occur that the buffering line of the trimming machine 4 reaches saturation in a relatively short time.

At this point, specially provided control means for monitoring the saturation condition of the buffering line of the trimming machine 4 will send a signal to the distributing means. When they receive such a signal, the distributing means automatically readjust so that they will no longer supply the trimming machine 4, but another trimming machine, such as for instance the trimming machine 5, according to a pre-programmed sequence.

When after a certain subsequent period of time the buffering line of the trimming machine 5 also reaches saturation, the just described process will be repeated once again, so that the distributing means will feed the next trimming machine, such as for instance the trimming machine 6, through the handling means.

The practical advantages of such a solution are apparent and can be summarized as follows:

1) The whole system up to and including the main feeding line and its trimming machines can keep regularly operating even in the case that not all of the trimming machines themselves are actually operative at the same time, so that it will be possible to put one or more trimming machine temporarily out of work, for instance to set-up, maintenance, repair or other purposes, without running any risk of impairing the efficiency of the remaining part of the manufacturing line.

2) The productivity of the whole manufacturing line is greatly increased, since its overall output rate, that was before determined by the maximum rate of a single trimming machine, is now equal to the sum of the working rates of all trimming machines installed.

3) No need arises any longer for a synchronism to exists to any extent between the manufacturing line and the trimming machines as well as among the trimming machines themselves, so that different trimming machines operating at different rates can also be used. The practical advantage here is given by the fact that it is possible to also use trimming machines of an older type, which are still in good conditions, but are obsolete due to their low working rate, and which, for that reason, would normally have to be replaced.

4) A further remarkable advantage derives from the fact that, while it was previously not possible with a single trimming machine, however high its working rate may also have been, to manufacture more than one type of cops per production run, (with resulting rigid planning requirements as far as production scheduling and inventories are concerned as well as in determing minimum production lots and meeting delivery delays), it is now possible, starting from a single type of semi-processed product (ie. the initial unfinished tube), more than one type of cops having at least partially different final characteristics.

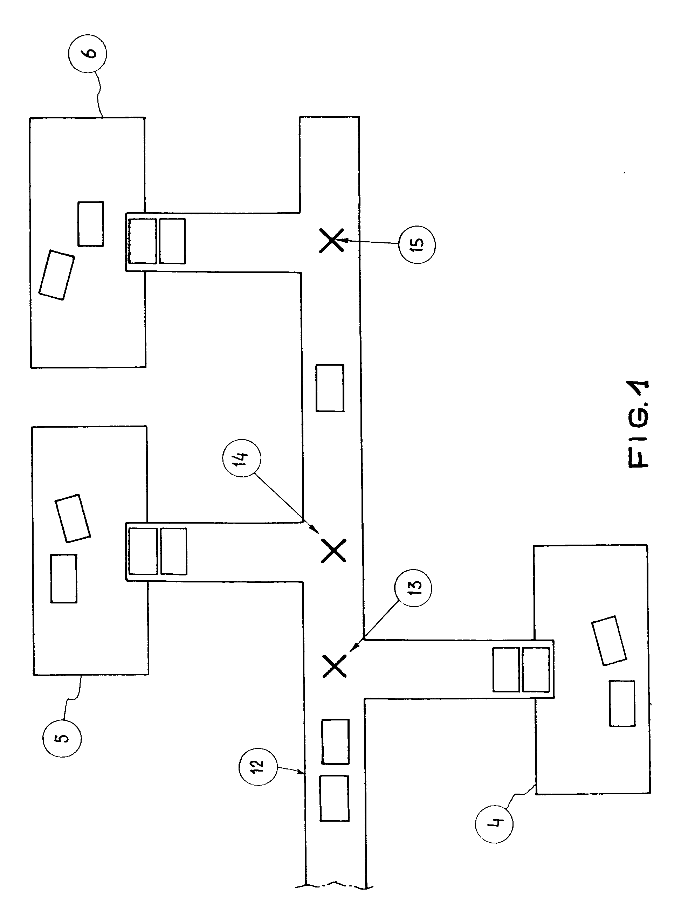

The above described solution according to Fig. 1 requires the inclusion of means that are capable of intercepting and catching with high rapidity and precision the moving cops, and conveying them in due sequence, without omitting any one of them and according to a precisely predefined timing, toward the selected trimming machine.

From the prior art it is known to provide for pneumatically driven pistons which move the cops out of said handling means toward the trimming or cartoning machine.

This method has proven to be quite reliable and economical, so that it is commonly applied in the industry.

However, the use of a pneumatic technique implies a definite operational limitation which is strictly to be seen in connection with the technique itself.

This is because the operating rate is limited, due to the necessary double upstroke and downstroke displacement of the piston, by the intrinsic inertia of the piston itself and the actual characteristics of the peculiar technique being implemented.

It ensues therefore that said pneumatic piston device quite often is not able to handle with an adequate rapidity all the cops that the manufacturing system before it would actually be able to produce and that would also be processable in the finishing equipment after it.

Ultimately, therefore, it is the system itself that is limited in its handling capacity and this heavily affects the efficiency and economicity of the whole manufacturing apparatus as already illustrated above.

Avoiding the afore described drawbacks, the apparatus according to the invention includes a reliable and economical device capable of ensuring a high operating rapidity, ie. a high handling rate, and featuring a particularly simple design, for transferring the cops from the handling means to the next processing steps.

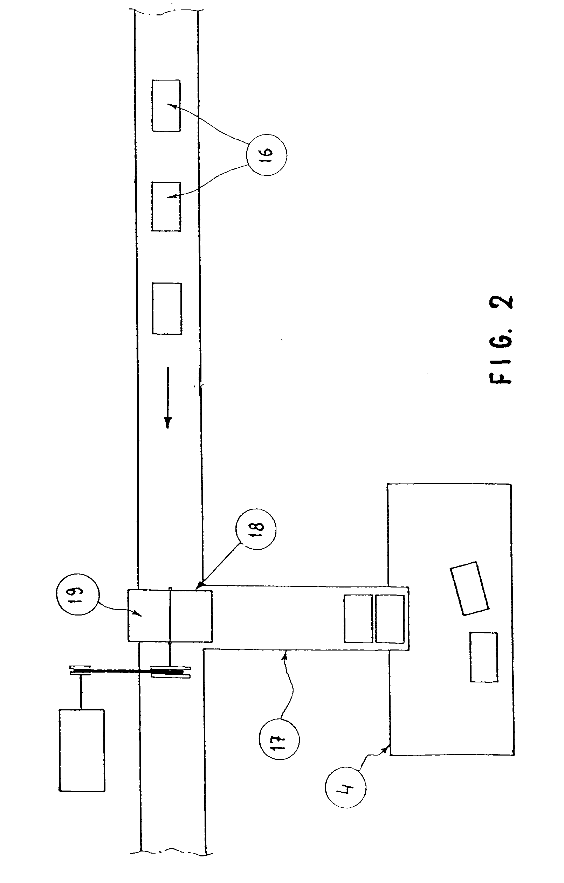

Referring to the accompanying drawings in Figs. 2, 3, 4, 5, in particular to Figure 2, following equipment parts can be noticed:

16) Cops (made of cardboard, plastics or any other suitable material).

4) Trimming or cartoning machine.

17) Loading ramp to the trimming or cartoning machines.

18) Rotating device according to this invention.

19) Work surfaces of said device.

The features illustrated in Figure 2 are quite clear to anyone which is skilled in the art, so that they do not need any further explanation.

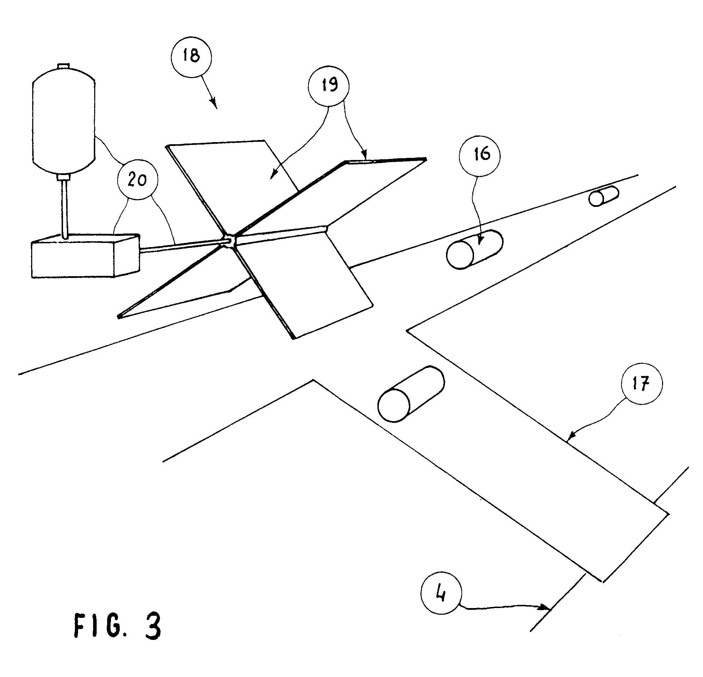

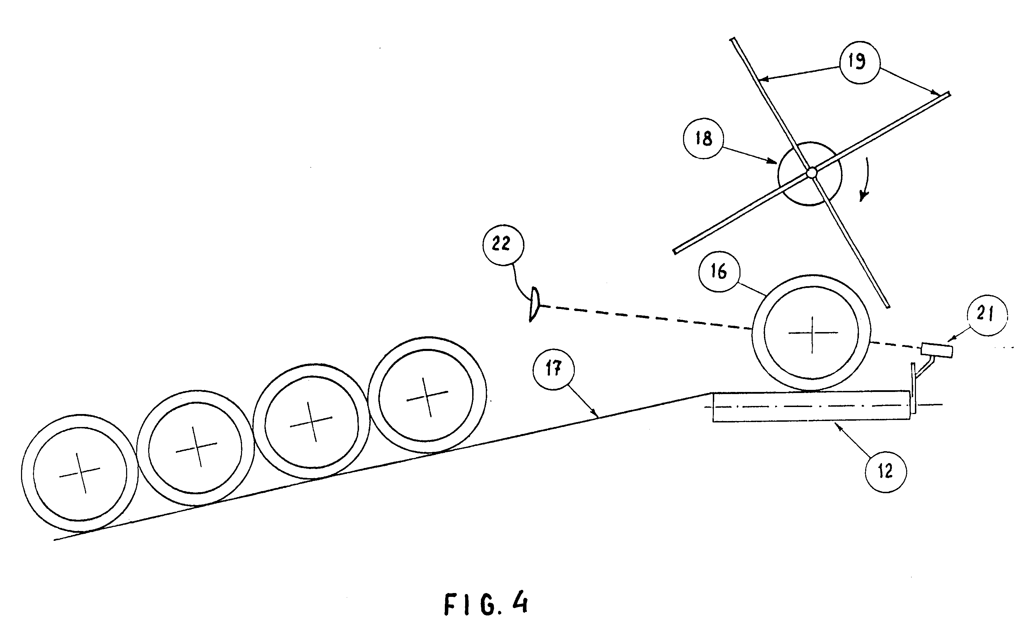

With particular reference to the Figures 3 and 4, following equipment parts are to be seen:

16) Cop approaching the station where it will be unloaded by the handling means.

19) Work surfaces of the rotating device.

20) Drive system and mechanical clutch-brake assembly for transmitting motion to the rotating wheel.

The device 18 is of course driven by a motor through coupling means consisting of a clutch-brake assembly actuated by a control device that will be described further on. With particular reference to Figure 4, the device according to the invention can be seen in its installed position, with the position sensors for detecting the presence of the moving objects duly fitted. These are typically formed by pairs of phtotoelectric cells 21 and 22 which are placed over the surface of the conveyor belt 12 in correspondence of the device 18.

The operating features and characteristics of the device will become now apparent to anyone which is skilled in the art. Once the cop has been manufactured in an essentially traditional way, the same is loaded together with all other cops, sequentially but not necessarily at a constant distance, on the conveyor 12 which will convey it towards the station where the device 18 is installed.

At this point the sensor 21, 22 detects the presence of said cop there and, through a servomechanism, sends a proper command to the rotating wheel which immediately makes a turn by such an angle as to push with its closest surface the cop onto the loading ramp, as well as by such a further angle as to clear the space on the conveyor 12 for the next cop to freely progress forward.

When the latter also reaches the due position, the just described process will take place again automatically, whichever the distance between the cops may also be and even if the cops are actually touching each other.

When the manufacturing rate increases upstream of the device (which thing is quite feasible based on the current state of the art), it is clear that also the moving rate of the cops along the conveyor 12 is going to accelerate. However, it will at this point be necessary that also the rapidity with which the cops are then ejected toward the next processing steps be adequately raised. And this can be attained through the described device thanks to its peculiar advantages in therms of simple design and operation, rapidity, reliablity and economy.

There is, however, a further advantage deriving front the device according to this invention, due to the possibility of working at very high rates of up to several hundreds of cops per minute. It is in fact quite desirable that the cops themselves are always kept separated from each other, ie. are spaced, so that they cannot interfere with each other when they are expelled from the means 12.

However, for them to be kept duly spaced, the cops shall be able to move at a higher speed for a given rate. This ensues in fact from the following equation:

$$v = (s + So)/t$$

where:

v = moving speed of the cops
s = distance between a cop and the next one
So = length of each single cop
t = time between a cop and the next one

It is therefore apparent that, if the rate has to be increased and, as a consequence the time t has to be decreased, while maintaining an adequate spacing s between the cops, it will be necessary to increase the moving speed v of the cops.

However, given the current state of the art, this would not give rise to any feasibility problem. It is therefore thoroughly possible to take full advantage of the potential capabilities of the device which can perform at operating rates of up to several hundreds of strokes per minutes, while maintaining an adequate spacing between the cops by simply increasing the moving speed of the conveyor 12 accordingly.

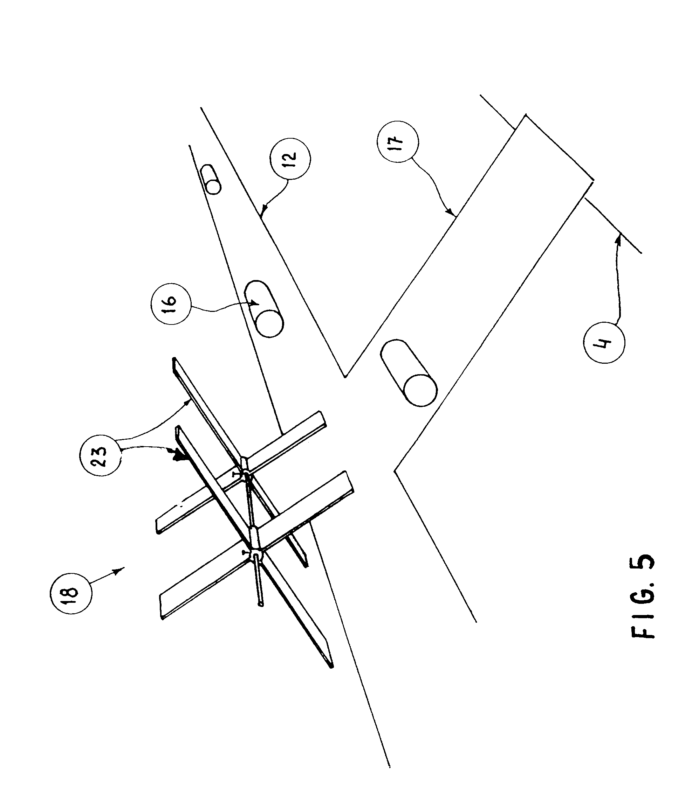

A preferred embodiment of said work surfaces 19 of the rotating device 18 is shown in Figure 5, where it can be seen that said surfaces are formed by a pair of substantially parallel arms 23 branching off outwards front the rotation axis of the device, the spacing between them being slightly narrower than the longitudinal size of the cop. In this way it is possible to further enhance the valuable result of appreciably reducing the total inertia of the rotating device 18.

A further improvement in the operation of the rotating device 18 is achieved through the feature that will be explained below.

It has been afore explained that said rotating device is actuated by a system of sensors capable of detecting the presence of the moving cops in a given position. It has also been said that said cops show up there in a random sequence, but at a high rate.

It is therefore apparent that the device 18 undergoes a continuous sequence of start, rotation and stop commands that can be issued at very high rates of up to several hundreds of cops per minute, as explained above.

In order to eliminate all possible passivities that would be encountered when using a traditional driving mechanism, as well as to eliminate the unavoidable time losses that would be experienced when using a motor to be started and stopped each time that a cop is detected by the sensors, a valuable improvement of the driving system consists in the use of a motor which runs continuously and which is connected to the rotating shaft of the device 18 through a so-called clutch-and-brake assembly of a type which is per se known in the art. In this way, it is actually possible to take synergetically advantage of both the low-inertia characteristics of the arms 23 (which shall however rotate and stop at a very high rate) and the peculiarities of motors running continuously and coupled to servo-controlled clutch-and-brake assemblies which, by acting as rotary stepping actuators, allow for very quick and frequent coupling and uncoupling sequences (but which are intended to only control low-inertia loads).

However, while the just described devices according to the illustrations in the Figures be considered as being efficient and reliable from the point of view of their operational rapidity, ie. the high rate at which they are able to transfer the cops from the handling means and feed them to the buffering line of the trimming machines, they feature a practical drawback that greatly impairs their overall effectiveness.

As a matter of fact, when the cops are moving at a high speed along the conveyor, the paddles of the rotary shifter shall hit each single cop in a way which is symmetrical and equal, ie. uniform, for all the cops, so that these will not become unbalanced and will fall onto the buffering line in the same position and with the same orientation. Moreover, each fork, after having pushed the cop, shall necessarily clear the path on the conveyor in order not to interfere with the passage of the next cop.

The need therefore arises for a perfect synchronism of the speed of the rotary shifter with the speed of the moving cops, while this requirement is further complicated by the fact that the spacing between successive cops can usually vary within a rather wide range.

By having resort to the modern, currently available technologies it would of course be possible to precisely synchronize the whole plant, but this obviously requires the use of very sophisticated, complex and very expensive control systems.

Avoiding the above cited drawbacks, the apparatus according to the invention includes a more rapid, more precise and relatively cheap system in view of commanding the cops out of the handling means and conveyor.

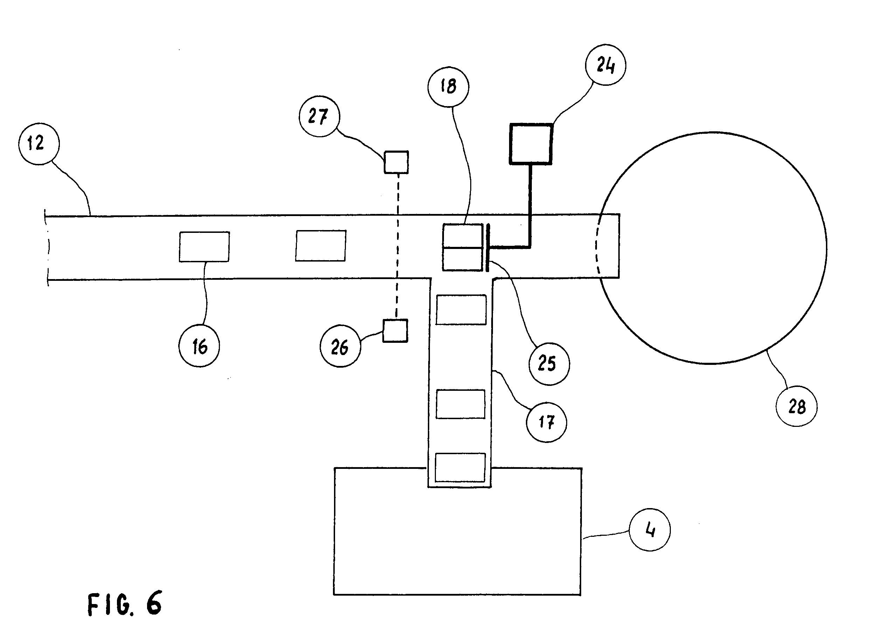

Following components and devices can be noticed in the Figure 6:

4) Trimming or cartoning machine.

12) Conveyor for unloading the cops from the cutting-to-length machine and delivering them to the trimming or cartoning machine.

16) Cops

18) Device for transferring the cops.

24) Actuating device for stopping the cops.

25) Stopping device.

26,27) Sensors for detecting the presence of objects on the conveyor 12.

28) End-of-line recovery container.

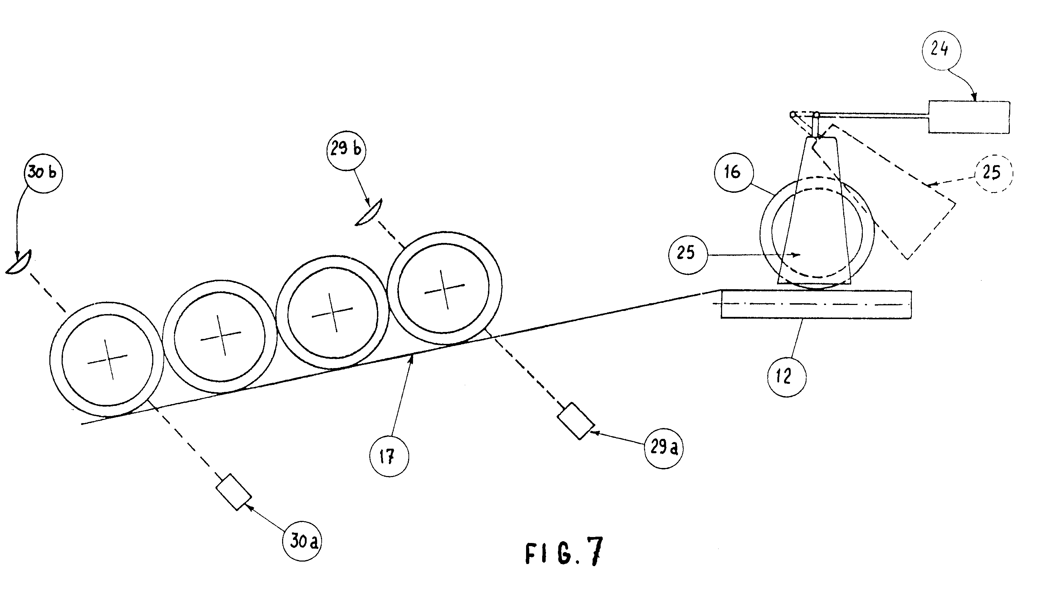

The actuating device for stopping the cops is a device which is better illustrated in Figure 7.

With particular reference to this Figure, it can be seen that it consists essentially of one or more stopping devices 25 which can take different positions: one of these positions lies above the conveyor 12 in such a way as to have the device 25 interfering with the outline generated by the moving cop 16 when this reaches the position where the transferring device 18 is located (Fig. 6).

This stopping device can be displaced outside said cop outline by an appropriate control mechanism 24.

One or more sensors for detecting the presence of objects, as they are typically formed by pairs of photoelectric cells 29a,29b,30a,30b, are located in correspondence of the extreme positions of the buffering line 17 used to feed the trimming machine 4.

The operation of this device is as follows: the cops 16, which are already cut to length, move along the conveyor 12 in sequence, but separated from each other, until they reach a device 25 which, acting as a kind of gate, is aimed at obstructing the passage of the cops in correspondence of the ramp 17, so that the other transferring device, 18, is able to push said cops out of the conveyor and feed them onto the buffering line 17.

When any one of the cops reaches said device 25, the latter will open or close according to the command that it is given by a servomechanism which is intended to actuate said gate.

Said command can be either a signal coming from a photoelectric cell 29a,29b which has detected an "overload" situation on the buffering line 17 or any other signal or command coming from any other type of sensor.

When appropriate signals or commands are coming from the sensors 29a, 29b, 30a and 30b, the transferring device 18 is actuated and will shift all the cops out of the conveyor.

When the line 17 is fully loaded, a proper signal coming from, the photoelectric cells 29a, 29b detecting the "overload" situation on the line 17 is sent to the mechanism 24 that acts on the device 25.

This sensor arrangement has therefore the task of delivering the signal for stopping the transferring device 18 and removing the stopping device 25, so as to allow the cops on the conveyor to go on moving on the conveyor 12 beyond the above illustrated line 17, until they fall into the proper recovery container 28 provided at the end of the conveyor.

When the photoelectric cell arrangement 30a, 30b will then detect again an "empty" situation an the buffering line 17, it sends a signal to the control mechanism 24 which moves the device 25 to obstruct the path along which the cops are moving on the conveyor.

At this point, all the cops moving along on the conveyor will again be stopped by the device 25 and, immediately thereupon, they will be pushed by the transferring device 18 toward the line 17.

It is therefore apparent that a complete stop-and-go cycle of the cops shall take place within the time span from, the passage of one cop to the passage of the next one.

It is however also apparent that it is much easier, less complex and less expensive to push a cop which is standing still, rather than to intercept, with great precision and perfect synchrony, a quickly moving sequence of cops that are passing by at an erratic rate, but always at a high speed.

An improvement in the way in which said stopping device 25 operates derives from the fact that it takes the form of a rotating wheel provided with a plurality of essentially similar paddles.

Each one of said paddles may constitute the necessary obstacle to the passage of the cops on their path along the conveyor, while between a paddle and the next one there is enough room for the cop to pass.

The advantage deriving from this device being included in the apparatus according to the invention is that the wheel can be made to rotate at high speed and, therefore, is able to achieve its function of opening and closing the passage to the cops at a rate which is much faster than the one ensured by a single-gate device as described above.

In order to eliminate all the passivities and the stresses that would inevitably derive from a practically uninterrupted sequence of up to several hundreds of cycles per minute of rotation start and stop commands, and also in view of eliminating the inevitable slowness problems that would arise if a motor were used which has to be started and stopped each time that a cop is being handled, a useful improvement in the driving and motion-transmission system would lie in the use of a continuously running motor which is connected with the rotating shaft of the stopping device 25 by a so-called clutch-and-brake assembly acting as a rotary stepping actuator, thereby implementing a driving technique similar to the one that was previously described in connection with the transferring device 18.

A further advantage is the following one: a drawback that can be experienced with a plant of a traditional type is the possibility that two or more cops are not duly spaced, but rather lie very close to each other or at an inadequate distance on the conveying means 12.

In this case, they would both be stopped and, when the device 18 pushes the first cop toward the loading ramp, an undesirable, detrimental friction would occur between the two contiguous cops, which thing would not only damage both cops, but also cause the second cop to be pushed out of the conveying means 12 and to fall outside the buffering line 17.

With a view to eliminate such a drawback, the sensor system could be advantageously devised and arranged in such a way as to enable it to appropriately detect the presence of two successive cops being at too close a distance from each other or even touching each other on the conveying means 12 and, in such a case, send a signal to the device 25 for it to open and allow said contiguous cops to pass by so that they will not be used in the on-going manufacturing process and, instead of this, will be collected in the appropriate container 28 which is provided at the end of the conveying line 12 for their due recovery.

A third advantage derives from the fact that it is possible to automatically detect any irregular conditions occurring along the conveyor 12 and duly take care of it in a similarly automatic way.

It may for instance happen that an off-cut scrap produced by the cutting-to-length machine is not duly separated and, therefore, is delivered onto the conveying means 12 together with the cops.

In this case, the sensors 26, 27 provided along the conveyor would immediately detect the passage of the irregular object and automatically command the stopping device 25 to clear the way, so that said irregular object can be allowed to fall in the container 28 at the end of the line, without it impairing the regular operation of the whole plant.

The afore described technical solutions can be wholly or partly implemented for the orderly transfer of a sequence of cops which are moving at a fast rate along a conveying means 12 of a general type towards a utilization station as may in particular be represented by a cartoning and packaging station, to which the cops are sent after their finishing and trimming processing steps and after having been transferred onto said conveying means 12 for delivery to said station.

## Claims

1. Apparatus for manufacturing cylindrical supports (16) such as cops, in particular cops made of cardboard, the apparatus comprising an upstream station with winding means suitable for forming tubes, first cutting means suitable for cutting the tubes into tube lengths, drying means and second cutting means suitable for cutting the tube lengths into cop blanks, the apparatus further comprising finishing means suitable for carrying out finishing operations on the cop blanks in order to form cops, characterised in that the finishing means are comprised in each of a plurality of downstream stations (4,5,6), each downstream station further comprising a buffering line (17) and in that distributing means are provided for selectively distributing the cop blanks (16) from the upstream station to one of the buffering lines (17) of the downstream stations (4,5,6) until that buffering line (17) is saturated, the distributing means comprising a conveyor (12) and a plurality of handling means (13,14,15) located along the conveyor, each of the handling means comprising a stopping device (25) and an associated transfer device (18), the transfer device being suitable for actively transferring the cop blanks (16) stopped by the stopping device (25) from the conveyor (12) laterally onto the corresponding buffering line (17) and allowing for the free passage of cops on the conveyor (12) if the corresponding buffering line (17) is saturated, the stopping device (25) comprising a first wheel with a plurality of first paddles, the first paddles being sufficiently spaced apart along the perimeter of the first wheel in order to allow a cop blank (16) on the conveyor (12) to pass in between of the first paddles, each of the first paddles being movable into and out of the passageway of the cop blanks by rotation of the first wheel, thereby selectively stopping cop blanks (16) on the conveyor (12) prior to their transfer onto the corresponding buffering line (17).

2. Apparatus according to claim 1, characterized in that said stopping device (25) is driven by a continuously running motor, said motor being connected with said stopping device through a mechanical clutch-and-brake assembly or a stepping gear acting as a rotary step-by-step actuator.

3. Apparatus according to claim 2, characterized in that two arrangements (21,22) for detecting the presence of cops (16) are provided for along the conveyor (12) in such manner, that an inadequate spacing of cops on the conveyor can be assessed, the wheel of the stopping device then being rotated in a position clearing the passageway of these cops.

4. Apparatus according to claim 3, characterized in that the handling element which transfers a cop (16) from the conveyor (12) onto the buffering line (17) is a second wheel (18) rotating around an axis which is substantially parallel to the moving direction of the conveyor and is located in a position above said conveyor, said second wheel bearing a plurality of second paddles (19) which are arranged radially and are sized in such a way as to intercept the cops moving along the conveyor.

5. Apparatus according to claim 4, characterized in that said second paddles (19) are of planar shape and include the rotation axis of the second wheel (18) in their plane.

6. Apparatus according to claim 5 characterized in that said second paddles (19) are spaced apart along the outer perimeter of the second wheel (18) by a clearance which is wide enough to allow for the passage of the cop.

7. Apparatus according to claim 6 characterized in that each of said second paddles (19) is consisting of a pair of substantially parallel arms (23) which are branching off from the rotation axis of the second wheel (18) by stretching outwards radially, and are located on said axis at a mutually adjustable distance.

8. Apparatus according to claim 7, characterized in that said second wheel (18) is driven by a continuously running motor, said motor being connected with said second wheel through a clutch-brake assembly or a stepping actuator gear (20).

9. Apparatus according to claim 8, characterized in that the operation of said second wheel (18) is controlled by the arrangements (21,22) capable of detecting the presence of cops on the conveyor.

**Patentansprüche**

1. Vorrichtung zur Herstellung von zylindrischen Trägern (16), wie beispielsweise Kopsen, insbesondere aus Pappe bestehenden Kopsen, wobei die Vorrichtung eine oberhalb befindliche Station mit einer Wickeleinrichtung umfaßt, die sich zur Herstellung von Röhren eignet, eine erste Schneideinrichtung, die sich zum Schneiden der Röhren in Röhrenabschnitte eignet, eine Trockeneinrichtung sowie eine zweite Schneideinrichtung, die sich zum Schneiden der Röhrenabschnitte zu Kopsrohlingen eignet, wobei die Vorrichtung des weiteren Endbearbeitungseinrichtungen umfaßt, die sich zum Ausführen von Endbearbeitungsvorgängen an den Kopsrohlingen eignen, um Kopse herzustellen, **dadurch gekennzeichnet**, daß die Endbearbeitungseinrichtungen aus jeder einer Vielzahl von unterhalb befindlichen Stationen (4, 5, 6) bestehen, wobei jede unterhalb befindliche Station des weiteren eine Pufferstrecke (17) umfaßt, und dadurch, daß Verteilungseinrichtungen vorhanden sind, die die Kopsrohlinge (16) von der oberhalb befindlichen Einrichtung wahlweise auf eine der Pufferstrecken (17) der unterhalb befindlichen Stationen (4, 5,6) verteilen sind, bis diese Pufferstrecke (17) voll ausgelastet ist, wobei die Verteilungseinrichtungen eine Fördereinrichtung (12) sowie eine Vielzahl von Weitererleitungseinrichtungen (13, 14, 15), die entlang der Fördereinrichtung angeordnet sind, umfassen, wobei jede der Weiterleitungseinrichtungen eine Anhalteeinrichtung (25) sowie eine zugehörige Überführungseinrichtung (18) umfaßt, wobei sich die Überführungseinrichtung dazu eignet, die durch die Anhalteeinrichtung (25) angehaltenen Kopsrohlinge (16) aktiv von der Fördereinrichtung (12) seitlich auf die entsprechende Pufferstrecke (17) zu überführen und Kopse ungehindert auf der Fördereinrichtung (12) durchzulassen, wenn die entsprechende Pufferstrecke (17) voll ausgelastet ist, wobei die Anhalteeinrichtung (25) ein erstes Rad mit einer Vielzahl erster Flügel umfaßt, wobei die ersten Flügel über den Umfang des ersten Rades ausreichend beabstandet sind, um einen Kopsrohling (16) auf der Fördereinrichtung (12) zwischen den ersten Flügeln durchzulassen, wobei jeder der ersten Flügel durch Drehung des ersten Rades in den Durchgangsweg der Kopsrohlinge und aus ihm heraus bewegt werden kann, wodurch Kopsrohlinge (16) auf der Fördereinrichtung (12) vor ihrer Überführung auf die entsprechende Pufferstrecke (17) wahlweise angehalten werden.

2. Vorrichtung nach Anspruch 1, **dadurch gekennzeichnet**, daß die Anhalteeinrichtung (25) durch einen kontinuierlich laufenden Motor angetrieben wird, wobei der Motor über eine mechanische Kupplungs-und-Bremsen-Baugruppe oder ein Schrittgetriebe, das als sich drehendes Schritt-Betätigungselement wirkt, mit der Anhalteeinrichtung verbunden ist.

3. Vorrichtung nach Anspruch 2, **dadurch gekennzeichnet**, daß zwei Anordnungen (21, 22) zur Erfassung des Vorhandenseins von Kopsen (16) entlang der Fördereinrichtung (12) so vorhanden sind, daß ein unzureichender Abstand von Kopsen auf der Fördereinrichtung bewertet werden kann, wobei das Rad der Anhalteeinrichtung dann in eine Stellung gedreht wird, in der der Durchgangsweg dieser Kopse freigemacht wird.

4. Vorrichtung nach Anspruch 3, **dadurch gekennzeichnet**, daß das Weiterleitungselement, das einen Kops (16) von der Fördereinrichtung (12) auf die Pufferstrecke (17) überführt, ein zweites Rad (18) ist, das sich um eine Achse dreht, die im wesentlichen parallel zu der Bewegungsrichtung der Fördereinrichtung ist, und das sich in einer Position oberhalb der Fördereinrichtung befindet, wobei das zweite Rad eine Vielzahl von zweiten Flügeln (19) trägt, die radial angeordnet sind und so bemessen sind, daß sie die Kopse aufhalten, die sich auf der Fördereinrichtung bewegen.

5. Vorrichtung nach Anspruch 4, **dadurch gekennzeichnet**, daß die zweiten Flügel (19) planare Form haben und die Drehachse des zweiten Rades (18) in ihrer Ebene einschließen.

6. Vorrichtung nach Anspruch 5, **dadurch gekennzeichnet**, daß die zweiten Flügel (19) über den Außenumfang des zweiten Rades (18) um einen Zwischenraum beabstandet sind, der groß genug ist, daß der Kops ihn passieren kann.

7. Vorrichtung nach Anspruch 6, **dadurch gekennzeichnet**, daß jeder der zweiten Flügel (19) aus einem Paar im wesentlichen paralleler Arme (23) besteht, die sich von der Drehachse des zweiten Rades (18) verzweigen, indem sie sich radial nach außen erstrecken, und die in einem wechselseitig einstellbaren Abstand auf der Achse angeordnet sind.

8. Vorrichtung nach Anspruch 7, **dadurch gekennzeichnet**, daß das zweite Rad (18) durch einen kontinuierlich laufenden Motor angetrieben wird, wobei der Motor über eine Kupplungs-Bremsen-Baugruppe oder ein Schritt-Betätigungsgetriebe (20) mit dem zweiten Rad verbunden ist.

9. Vorrichtung nach Anspruch 8, **dadurch gekennzeichnet**, daß die Funktion des zweiten Rades (18) durch die Anordnungen (21, 22) gesteuert wird, die in der Lage sind, das Vorhandensein von Kopsen auf der Fördereinrichtung zu erfassen.

**Revendications**

1. Appareil pour fabriquer des supports cylindriques (16) tels que des cops, en particulier des cops formés de carton, l'appareil comprenant un poste en amont avec des moyens d'enroulement appropriés pour former des tubes, des premiers moyens de coupe adaptés pour couper les tubes en éléments de tube, des moyens de séchage et des seconds moyens de coupe adaptés pour couper les éléments de tube en ébauches de cops, l'appareil comprenant en outre des moyens de finissage adaptés pour effectuer des opérations de finissage sur les ébauches de cops afin de former des cops, caractérisé en ce que les moyens de finissage sont placés dans chacun d'une pluralité de postes en aval (4, 5, 6), chaque poste en aval comprenant en outre une ligne tampon (17), et en ce que des moyens de distribution sont prévus pour distribuer sélectivement les ébauches de cops (16) depuis le poste en amont vers une des lignes tampons (17) des postes en aval (4, 5, 6) jusqu'à ce que la ligne tampon (17) soit saturée, les moyens de distribution comprenant un transporteur (12) et une pluralité de moyens de manutention (13, 14, 15) placés le long du transporteur, chacun des moyens de manutention comprenant un dispositif d'arrêt (25) et un dispositif de transfert associé (18), le dispositif de transfert étant adapté pour transférer activement les ébauches de cops (16) arrêtées par le dispositif d'arrêt (25) depuis le transporteur (12) latéralement sur la ligne tampon (17) correspondante et pour permettre le libre passage des cops sur le transporteur (12) si la ligne tampon (17) correspondante est saturée, le dispositif d'arrêt (25) comprenant une première roue ayant une pluralité de premières pales, les premières pales étant suffisamment espacées le long du périmètre de la première roue pour permettre à une ébauche de cops (16) sur le transporteur (12) de passer entre les premières pales, chacune des premières pales pouvant être déplacée dans et hors du passage des ébauches de cops sous l'effet de la rotation de la première roue, en arrêtant ainsi de façon sélective les ébauches de cops (16) sur le transporteur (12) avant leur transfert sur la ligne tampon (17) correspondante.

2. Appareil selon la revendication 1, caractérisé en ce que ledit dispositif d'arrêt (25) est entraîné par un moteur à marche continue, ledit moteur étant relié audit dispositif d'arrêt par un assemblage mécanique d'embrayage-frein ou un mécanisme pas-à-pas agissant comme un dispositif d'actionnement de rotation pas-à-pas.

3. Appareil selon la revendication 2, caractérisé en ce que deux dispositifs (21, 22) pour détecter la présence de cops (16) sont prévus le long du transporteur (12) de telle manière qu'un espacement inadéquat des cops sur le transporteur puisse être déterminé, la roue du dispositif d'arrêt étant alors mise en rotation dans une position permettant de dégager le passage de ces cops.

4. Appareil selon la revendication 3, caractérisé en ce que l'élément de manutention qui transfère un cops (16) du transporteur (12) sur la ligne tampon (17) est une seconde roue (18) tournant autour d'un axe qui est sensiblement parallèle a la direction de mouvement du transporteur et qui est située dans une position au-dessus dudit transporteur, ladite seconde roue comportant une pluralité de seconde pales (19) qui sont disposées radialement et qui sont dimensionnées de façon à intercepter les cops avançant le long du transporteur.

5. Appareil selon la revendication 4, caractérisé en ce que lesdites secondes pales (19) ont une forme plane et comprennent l'axe de rotation de la seconde roue (18) dans leur plan.

6. Appareil selon la revendication 5, caractérisé en ce que lesdites secondes pales (19) sont espacées le long du périmètre extérieur de la seconde roue (18) d'une distance qui est suffisamment large pour permettre le passage du cops.

7. Appareil selon la revendication 6, caractérisé en ce que chacune desdites secondes pales (19) est composée d'une paire de bras sensiblement parallèles (23) qui partent de l'axe de rotation de la seconde roue (18) en s'étirant radialement vers l'extérieur, et qui sont placés sur ledit axe à une distance mutuellement réglable.

8. Appareil selon la revendication 7, caractérisé en ce que ladite seconde roue (18) est entraînée par un moteur à marche continue, ledit moteur étant relié à ladite seconde roue par un assemblage embrayage-frein ou par un mécanisme d'actionnement pas-à-pas (20).

9. Appareil selon la revendication 8, caractérisé en ce que le fonctionnement de ladite seconde roue (18) est commandé par les dispositifs (21, 22) pouvant détecter la présence de cops sur le transporteur.

FIG.1

FIG. 2

FIG. 3

FIG. 4

FIG. 5

FIG. 6

FIG. 7

EP 0 374 489 B1